# EUROPEAN PATENT SPECIFICATION

(11) **EP 0 418 011 B1**
(45) Date of publication and mention of the grant of the patent: **18.02.1998**
(21) Application number: 90309868.9
(22) Date of filing: 10.09.1990
(51) Int. Cl.: C08G 59/17, G03F 7/038

(54) **Process for producing photocurable resins and compositions containing them.**
Verfahren zur Herstellung photohärtbarer Harze und diese Harze enthaltenden Zusammensetzungen.
Procédé de préparation de résines photoréticulables et compositions les comprenant.

(30) Priority: 12.09.1989 GB 8920581
(43) Date of publication of application: 20.03.1991
(73) Proprietor: SERICOL LIMITED, Broadstairs, Kent CT10 2PA (GB)
(72) Inventor: Pocock, Stephen John, Ramsgate, Kent, CT11 0BS (GB); Thorpe, Anthony Stephen, Margate, Kent, CT9 1JB (GB)
(74) Representative: Lewis, Pauline Therese

(56) References cited:
- EP-A- 0 273 729
- FR-A- 2 136 056
- FR-A- 2 317 331
- GB-A- 1 165 647

## Description

This invention concerns the production of photocurable resins, and compositions containing them, particularly in the form of solder mask inks.

British Patent Specification 2175908 describes solder mask inks based on novolak type photo-sensitive oligomers. Although these inks have satisfactory thermal resistance and electrical properties, they also contain a thermosetting resin in order to achieve these properties. This has the disadvantage that the thermosetting resin requires the presence of a catalyst, for example imidazole and/or methylaminobenzoate, which necessitates that the inks be of the two-pack type or premature cross-linking will occur. Thus once mixing has occurred, storage of the inks is often limited to a matter of two or three days.

European Patent Application 0273729 proposes solder mask inks consisting of a mixture of the products of reacting a dicarboxylic acid with a mixture of acrylates of cresol and phenol-type novolak resins in order to provide the inks with satisfactory thermal, electrical and development properties. The amount of acrylic acid reacted with the cresol novolak is set within narrow limits because at ratios of equivalents outside the specified range of from 0.9 to 1.0, gelling of the reaction mixture occurs when it is subsequently reacted with the dicarboxylic acid anhydride.

According to the present invention there is provided a process for the production of a photocurable resin, the process comprising reacting from 0.4 to 0.9 equivalents of acrylic acid with 1.0 equivalents of a cresyl novolak-type epoxy resin in the presence of a transition metal compound as a catalyst and in the absence of an amine or phosphine catalyst, and thereafter reacting the product with a dicarboxylic acid anhydride.

Amines and phosphines have been proposed hitherto for the catalysis of the reaction of epoxy resins with carboxylic acids and subsequently with carboxylic acid anhydrides. However, by not using such catalysts and using a transition metal compound instead, gelling of the reaction mixture can be avoided, particularly at ratios of reactants where gelling has hitherto been encountered. This has the further advantage that smaller amounts of acrylic acid can be reacted with the novolak resin, for example than are proposed in European Patent Application 0273729, without gelling when the resultant acrylate is subsequently reacted with the dicarboxylic acid anhydride which enables compositions of the present invention to be formulated in one-pack form. The resultant resins after reaction with the anhydride can also be cured without having to add further polymerisable components.

The amount of acrylic acid reacted with the cresol novolak epoxy resin is in the equivalent range of from 0.4 to 0.9 per equivalent of the epoxy resin, preferably in the range of from 0.4 to 0.8, and advantageously in the range of from 0.7 to 0.8. This has the further advantage that sufficient epoxy groups can remain in the reaction product that solder mask inks containing resins produced in accordance with the present invention can be both photocurable and thermosetting, thereby enabling the use of a separate thermosetting resin to be avoided.

Solder mask inks containing photocurable resins produced in accordance with the present invention are easy to process and they have shown exceptionally good thermal and electrical properties. They have also shown good photocuring and development characteristics without the addition of a thermosetting epoxy resin.

In accordance with the present invention, the catalyst for the reaction of the acrylic acid with the cresol novolak-type resin is a transition metal compound, and amine and phosphine catalysts should not be present. Salts and organic complexes of transition metal are generally preferred, examples of such transition metals including chromium, tin, vanadium, and zirconium. Examples of organic complexes include acetylacetonates, e.g. chromium acetylacetonate. Examples of transition metal salts are carboxylate salts, for example salts of aliphatic carboxylic acids, and especially such salts described generally as soaps. Examples of cations of such salts are octanoate, 2-ethylhexanoate, and stearate. Especially preferred transition metal salts by virtue of the good catalytic effect they provide combined with the avoidance of gelling are chromium octanoate and zirconium octanoate.

The amount of catalyst present should be sufficient to catalyse the reaction of the acrylic acid with the cresol novolak resin at a desired reaction rate, this preferably being from 0.01 to 2.0 percent based on non-volatile components of the reaction of the epoxy compound with the acrylic acid.

A free radical scavenger, for example 4-methoxyphenol or more particularly oxygen, is preferably present during both reaction steps in order to prevent premature cross-linking of the products of either of the reaction steps.

The subsequent reaction of the novolak acrylate with the dicarboxylic acid anhydride involves reaction of the anhydride with hydroxyl groups generated by the reaction of the acrylic acid with the novolak. The equivalent ratio of anhydride to hydroxyl groups in this subsequent reaction is preferably from 0.4 to 1.0 and more preferably from 0.5 to 0.8.

Compositions obtained by the process of the present invention have exhibited rapid photocuring combined with alkali solubility of the uncured compositions which provides good developability. Furthermore, at ambient temperature compositions of the invention have shown stability on storage for several months compared with the few days of prior art compositions.

The following Examples are given by way of illustration only. All parts are by weight unless otherwise stated.

### Example 1

430 parts of cresol-novolak epoxy resin (Quatrex 3710, available from Dow Chemicals - epoxy equivalent 215) were heated at 100°C with and dissolved in 312 parts of ethoxyethyl propionate whilst sparging the mixture with dried air, the air flow being continued throughout the subsequent steps. 2 parts of 4-methoxyphenol and 6 parts of a 70% solution of zirconium octoate in white spirit were added to the mixture.

105 parts (1.45 equivalents) of acrylic acid were then added at 95-100°C over 1 hour.

The temperature of the reaction mixture was then raised to and held at 105°C until the product had an acid value of less than 2 milligrams of KOH/g of resin produced. 133 parts of tetrahydrophthalic anhydride were then added, and the resulting mixture was maintained at 105°C for 6 hours, after which time the amount of free anhydride in the product was less than 3.0% by weight.

140 parts of the resin produced, 4 parts of 2-ethyl-anthraquinone, 6 parts of acyl phosphine oxide, 4 parts of 2-(iso-propyl)thioxanthone, 10 parts of 1-hydroxy cyclohexyl acetophenone, 30 parts of talc, 6 parts of silica, 8 parts of flow controller (Modaflow from Monsanto), 2 parts of phthalocyanine green pigment, 4 parts of aliphatic urethane diacrylate (Photomer 6217 from Harcross), 4 parts of epoxy novolak acrylate (Ebecryl 639 from UCB Chemicals) were mixed together to form a homogenous paste which was then ground using a roll mill to produce a solder mask ink composition.

The composition was applied by screen printing to an IPC-B-25 test panel to achieve a wet film thickness of 35 microns. The film was heated at 80°C for 40 minutes to achieve a hard, dry, tack-free coating.

Using a diazo or a silver halide photo-tool artwork, the coating was selectively exposed for 50 seconds to ultra-violet light of a wavelength predominantly in the region of 365nm at a power of 450mj/cm .

After the exposure, the photo-tool was removed, and the unexposed areas of the coated panel were removed by spraying with a 1% aqueous solution of sodium carbonate at a temperature of 35°C.

During processing the panel was then subjected to the following tests:-
1. After exposure, it was observed that the artwork did not stick to pre-dry film after being left in contact under a vacuum of 0.85Torr.
2. After development in 1% aqueous sodium carbonate solution at 35°C - there were no residues left on unexposed areas.

The coating on the panel was then cured further by heating it to 145°C for 60 minutes. The cured panel was then subjected to the following tests:-
3. Cross hatch and tape test - according to BS 6096.
4. Solder resistance - tested by 2 pass hot air solder levelling, a tape adhesion test being effected after each pass.
5. Solvent resistance - according to BS 6096.
6. Flux compatibility - according to BS 6096.
7. Insulation resistance - according to IPC 7 day procedure in document IPC SM840B - ClassIII.

The results of the tests are given in the accompanying Table.

### Example 2

402 parts of cresol epoxy novolak (EOCN - 1025 available from Nippon Kayaku - epoxy equivalent weight 201) were heated and dissolved in 337 parts of 2-butoxyethyl acetate at 100°C with dry air sparging as described in Example 1. Thereafter, the mixture was reacted with 105 parts of acrylic acid and subsequently with 118 parts of maleic anhydride in a manner similar to the procedure described in Example 1. 140 parts of the resulting resin were used to produce a solder mask ink as described in Example 1 using the same amounts of the other materials. Test data obtained for a coated and cured panel using this ink are given in the accompanying Table.

### Example 3

420 parts of cresol epoxy novolak (Quatrex 3410 from Dow Chemicals - epoxy equivalent 210) were dissolved in 469 parts of 2-isopropoxyethyl acetate. The two stage reaction procedure described in Example 1 was followed, except that 105 parts of acrylic acid were used in the first stage, and 178 parts of phthalic anhydride were used in the second stage.

140 parts of the resin produced were then used to produce a solder mask ink as described in Example 1 using the same amounts of materials. Test data obtained for a coated and cured panel using this ink are given in the accompanying Table.

### Comparative Example A

358 parts of phenol novolak epoxy resin (DEN 438 from Dow Chemicals - epoxy equivalent 179) were dissolved in 231 parts of 2-ethoxyethyl propionate at 100°C. The two stage reaction procedure described in Example 1 was followed, except that 74 parts of acrylic acid were used in the first stage, and 106 parts of tetrahydrophthalic anhydride were used in the second stage.

140 parts of the resin produced were then used to produce a solder mask ink as described in Example 1 using the same amounts of the other materials. Test data obtained for a coated and cured panel using this ink are given in the accompanying Table.

### Comparative Example B

380 parts of phenol novolak type epoxy resin (Epikote 155 from Shell - equivalent weight 190) were dissolved in 296 parts of 2-butoxyethyl acetate at 100°C. The two stage reaction procedure described in Example 1 was followed, except that 72 parts of acrylic acid were used in the first stage, and 98 parts of maleic anhydride were used in the second stage.

140 parts of the resin produced were then used to produce a solder mask ink as described in Example 1 using the same amounts of the other materials. Test data obtained for a coated and cured panel using this ink are given in the accompanying Table.

### Comparative Example C

360 parts of a phenolic novolak epoxy resin (Araldite GY 1180 from CIBA-GEIGY - epoxy equivalent 180) were dissolved in 312 parts of iso-propoxyethyl acetate at 100°C. The two stage reaction procedure described in Example 1 was followed, except that 72 parts of acrylic acid were used in the first stage, and 148 parts of phthalic anhydride were used in the second stage.

140 parts of the resin produced were then used to produce a solder mask ink as described in Example 1 using the same amounts of materials. Test data obtained for a coated and cured panel using this ink are given in the accompanying Table.

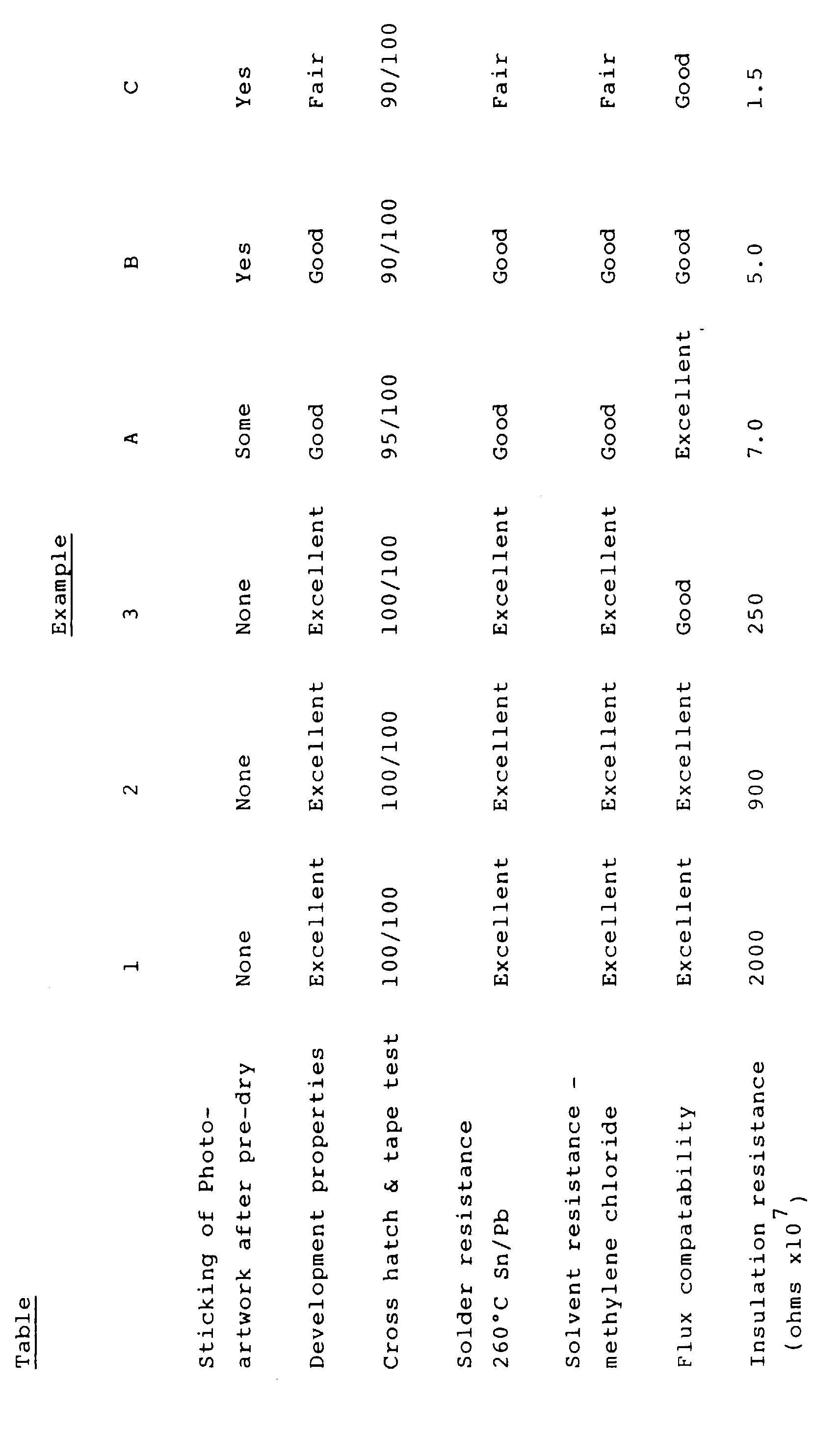

## Claims

1. A process for the production of a photocurable resin, the process comprising reacting from 0.4 to 0.9 equivalents of acrylic acid with 1.0 equivalents of a cresyl novolak-type epoxy resin in the presence of a transition metal compound as a catalyst and in the absence of an amine or phosphine catalyst, and thereafter reacting the product with a dicarboxylic acid anhydride.

2. A process according to claim 1, wherein the catalyst comprises a transition metal salt or a transition metal complex.

3. A process according to claim 2, wherein the catalyst is a zirconium or a chromium salt.

4. A process according to any of the preceding claims, wherein the catalyst is a salt of an alkanoic acid.

5. A process according to any of the preceding claims, wherein the catalyst comprises a salt of octanoic acid.

6. A process according to any of the preceding claims, wherein the catalyst is present in an amount of from 0.01 to 2.0 percent based on the non-volatile components of the reaction product of the epoxy resin with the acrylic acid.

7. A process according to any of the preceding claims, wherein from 0.7 to 0.8 equivalents of acrylic acid are reacted with 1.0 equivalents of a cresol novolak epoxy resin.

8. A process according to any of the preceding claims, wherein from 0.4 to 1.0 equivalents of the dicarboxylic acid anhydride are reacted with each equivalent of hydroxy groups present in the product of reacting the acrylic acid with the cresol novolak epoxy resin.

9. A process according to claim 8, wherein from 0.5 to 0.8 equivalents of the dicarboxylic acid anhydride are reacted with 1.0 equivalents of the said hydroxy groups.

10. A solder mask ink comprising a photocurable resin produced by a process according to any of the preceding claims.

11. An ink according to claim 10, which is both photocurable and thermosetting without the addition of a thermosetting resin.

## Patentansprüche

1. Verfahren zur Herstellung eines photohärtbaren Harzes, bei dem man 0,4 bis 0,9 Äquivalente Acrylsäure in Gegenwart einer Übergangsmetallverbindung als Katalysator und ohne Amin- oder Phosphinkatalysator mit 1,0 Äquivalenten eines Epoxidharzes vom Kresyl-Novolak-Typ umsetzt und das Produkt danach mit einem Dicarbonsäureanhydrid umsetzt.

2. Verfahren nach Anspruch 1, bei dem man als Katalysator ein Übergangsmetallsalz oder einen Übergangsmetallkomplex einsetzt.

3. Verfahren nach Anspruch 2, bei dem man als Katalysator ein Zirkonium- oder Chromsalz einsetzt.

4. Verfahren nach einem der vorhergehenden Ansprüche, bei dem man als Katalysator ein Alkansäuresalz einsetzt.

5. Verfahren nach einem der vorhergehenden Ansprüche, bei dem man als Katalysator ein Octansäuresalz einsetzt.

6. Verfahren nach einem der vorhergehenden Ansprüche, bei dem man den Katalysator in einer Menge von 0,01 bis 2,0 Prozent, bezogen auf die nichtflüchtigen Komponenten des Reaktionsprodukts aus dem Epoxidharz und der Acrylsäure, einsetzt.

7. Verfahren nach einem der vorhergehenden Ansprüche, bei dem man 0,7 bis 0,8 Äquivalente Acrylsäure mit 1,0 Äquivalenten eines Epoxidharzes vom Kresol-Novolak-Typ umsetzt.

8. Verfahren nach einem der vorhergehenden Ansprüche, bei dem man pro Hydroxylgruppen-Äquivalent im Reaktionsprodukt aus dem Epoxidharz vom Kresol-Novolak-Typ und der Acrylsäure 0,4 bis 1,0 Äquivalente des Dicarbonsäureanhydrids einsetzt.

9. Verfahren nach Anspruch 8, bei dem man 0,5 bis 0,8 Äquivalente des Dicarbonsäureanhydrids mit 1,0 Äquivalenten der Hydroxylgruppen umsetzt.

10. Lötstopplack, enthaltend ein nach einem Verfahren gemäß einem der vorhergehenden Ansprüche hergestelltes photohärtbares Harz.

11. Lötstopplack nach Anspruch 10, der ohne Zusatz eines warmhärtenden Harzes sowohl photohärtbar als auch warmhärtbar ist.

## Revendications

1. Procédé de production d'une résine photodurcissable, le procédé comprenant la réaction de 0,4 à 0,9 équivalent d'acide acrylique avec 1,0 équivalent d'une résine époxy de type novolaque crésylique en présence d'un composé d'un métal de transition en tant que catalyseur et en l'absence d'un catalyseur amine ou phosphine, et ensuite la réaction du produit avec un anhydride d'acide dicarboxylique.

2. Procédé selon la revendication 1, dans lequel le catalyseur comprend un sel d'un métal de transition ou un complexe d'un métal de transition.

3. Procédé selon la revendication 2, dans lequel le catalyseur est un sel de zyrconium ou de chrome.

4. Procédé selon l'une quelconque des revendications précédentes, dans lequel le catalyseur est un sel d'un acide alcanoïque.

5. Procédé selon l'une quelconque des revendications précédentes, dans lequel le catalyseur comprend un sel de l'acide octanoïque.

6. Procédé selon l'une quelconque des revendications précédentes, dans lequel le catalyseur est présent en une quantité de 0,01 à 2,0 pour cent, sur la base des composants non volatils du produit de réaction de la résine époxy avec de l'acide acrylique.

7. Procédé selon l'une quelconque des revendications précédentes, dans lequel on met à réagir 0,7 à 0,8 équivalent d'acide acrylique avec 1,0 équivalent d'une résine époxy novolaque crésolique.

8. Procédé selon l'une quelconque des revendications précédentes, dans lequel on met à réagir de 0,4 à 1,0 équivalent de l'anhydride d'acide dicarboxylique avec chaque équivalent de groupes hydroxy présents dans le produit de réaction de l'acide acrylique avec la résine époxy novolaque crésolique.

9. Procédé selon la revendication 8, dans lequel on met à réagir de 0,5 à 0,8 équivalent de l'anhydride d'acide dicarboxylique avec 1,0 équivalent desdits groupes hydroxy.

10. Encre pour masque de soudure comprenant une résine photodurcissable produite par un procédé selon l'une quelconque des revendications précédentes.

11. Encre selon la revendication 10, qui est à la fois photodurcissable et thermodurcissable sans addition d'une résine thermodurcissable.
